# EUROPÄISCHE PATENTSCHRIFT

(11) **EP 1 847 077 B1**
(45) Veröffentlichungstag und Bekanntmachung des Hinweises auf die Patenterteilung: **29.09.2010**
(21) Anmeldenummer: 06704218.4
(22) Anmeldetag: 12.01.2006
(51) Int. Cl.: H04L 12/56, H04W 28/12

(54) **Verfahren zur Steuerung von Datenübertragungen von einer sendenden Einrichtung an eine empfangende Einrichtung eines Funkzugangsnetzes eines Funkkommunikationssystems sowie empfangende Einrichtung und Funkzugangsnetz**
Method for controlling data transmissions from a transmitting device to a receiving device of a radio access network of a radio communication system, receiving device and radio access network
Procédé de commande de transmissions de données d'un dispositif émetteur vers un dispositif récepteur d'un réseau à accès radio d'un système de communication radio, dispositif récepteur et réseau à accès radio

(30) Priorität: 11.02.2005 DE 102005006530
(43) Veröffentlichungstag der Anmeldung: 24.10.2007
(73) Patentinhaber: SIEMENS AKTIENGESELLSCHAFT, 80333 München (DE)
(72) Erfinder: GARTNER, Beate, A-2542 Kottingbrunn (AT); LUNTER, Pavol, 85101 Bratislava (SK); VESELY, Alexander, A-8330 Feldbach (AT)
(86) Internationale Anmeldenummer: PCT/EP2006/050190
(87) Internationale Veröffentlichungsnummer: WO 2006/084779

(56) Entgegenhaltungen:
- US-A1- 2002 087 723
- US-A1- 2003 139 145
- US-A1- 2004 052 212

## Beschreibung

Die Erfindung betrifft ein Verfahren zur Steuerung von Datenübertragungen von einer sendenden Einrichtung an eine empfangende Einrichtung eines Funkzugangsnetzes eines Funkkommunikationssystems sowie eine entsprechende empfangende Einrichtung und ein entsprechendes Funkzugangsnetz eines Funkkommunikationssystems.

In Funkzugangsnetzen von Funkkommunikationssystemen, beispielsweise im UTRAN (Universal Telecommunications Radio Access Network) des UMTS-Standards (UMTS: Universal Mobile Telecommunications System), werden zwischen Einrichtungen des Funkzugangsnetzes, beispielsweise zwischen einer Basisstation (Node B) und einer Funknetzsteuerung (RNC: Radio Network Controller) oder zwischen zwei Funknetzsteuerungen, Daten über Transportkanäle über eine von den Transportkanälen gemeinsam genutzte Übertragungsressource (shared medium), beispielsweise eine Datenleitung, übertragen. Die Transportkanäle sind logische Kanäle, durch die unterschiedliche Datenströme, beispielsweise verschiedene Arten von Daten oder verschiedene Dienstqualitäten (QoS: Quality of Service) logisch (in Gegensatz zu physikalisch) getrennt werden. Daten mehrerer logischer Kanäle können gemeinsam über eine physikalische Übertragungsressource übertragen werden.

Auf der gemeinsam genutzten Übertragungsressource kann es zu einer Verzögerung bei der Übertragung von Daten kommen. Ein derartiger Datenstau entsteht, wenn eine die Daten empfangenden Einrichtung nicht alle empfangenen Daten weiterleiten oder nur mit einer zu geringen Datenrate weiterleiten kann. Um einen Datenstau zu verhindern oder aufzulösen, besteht die Möglichkeit, den Datendurchsatz und oder die Weiterleitung der Daten in der empfangenden Einrichtung zu überwachen und einer sendenden Einrichtung zu signalisieren, wenn ein Datenstau vorliegt oder voraussichtlich demnächst eintritt. Die sendende Einrichtung kann daraufhin Maßnahmen ergreifen, beispielsweise eine Reduzierung der Datenrate auf der gemeinsam genutzten Übertragungsressource, um den Datenstau zu verhindern oder aufzulösen.

Aus der US 2004/0052212 A1 ist eine Paketflussteuerung in einem drahtlosen Kommunikationsnetzwerk unter Verwendung von in Paketen enthaltenen Indikatoren bekannt.

Der Erfindung liegt die Aufgabe zugrunde, ein vorteilhaftes Verfahren sowie eine empfangende Einrichtung für ein Funkzugangsnetz und ein Funkzugangsnetz jeweils eines Funkkommunikationssystems anzugeben, mittels derer ein Datenstau mit geringem Signalisierungsaufwand in der empfangenden Einrichtung vermieden oder aufgelöst werden kann.

Diese Aufgabe wird mit dem Verfahren sowie der empfangenden Einrichtung und dem Funkzugangsnetz 1, 13 und 14 gemäß den unabhängigen Ansprüchen 1, 13 und 14 gelöst.

Vorteilhafte Ausgestaltungen und Weiterbildungen der Erfindung sind Gegenstand der abhängigen Ansprüche.

Bei dem erfindungsgemäßen Verfahren zur Steuerung von Datenübertragungen von einer sendenden Einrichtung an eine empfangende Einrichtung eines Funkzugangsnetzes eines Funkkommunikationssystems, werden Daten über Transportkanäle über eine von allen Transportkanälen gemeinsam genutzte Übertragungsressource von der sendenden Einrichtung an die empfangende Einrichtung übertragen, der sendenden Einrichtung wird ein Eintreten oder ein bevorstehendes Eintreten eines Datenstaus in der empfangenden Einrichtung signalisiert, und die sendende Einrichtung führt Maßnahmen zum Verhindern oder zum Beenden des Datenstaus durch. Erfindungsgemäß ordnet die sendende Einrichtung wenigstens einen der Transportkanäle einer ersten von zwei Gruppen von Transportkanälen anhand eines Unterscheidungsmerkmals für die Transportkanäle zu und wendet die Maßnahmen ausschließlich auf Daten von Transportkanälen der ersten Gruppe an.

Durch die Erfindung wird ermöglicht, dass Signalisierungen, die zur Durchführung der Maßnahmen erforderlich sind, nur für die Transportkanäle der ersten Gruppe erfolgen. Die Transportkanäle, die zur zweiten Gruppe gehören, übertragen ihre Daten auch bei einem Datenstau oder einem bevorstehenden Datenstau, ohne dass an den entsprechenden Übertragungsparametern Änderungen erfolgen. Die Erfindung ermöglicht somit durch eine Beschränkung der Signalisierung auf die Transportkanäle der ersten Gruppe eine Reduzierung einer Signalisierungslast. Durch eine geschickte Auswahl der zur ersten Gruppe gehörenden Transportkanäle, kann darüber hinaus erreicht werden, dass die Maßnahmen nur an denjenigen Transportkanälen durchgeführt werden, für deren Datenübertragung die Maßnahmen verglichen mit den Transportkanälen der zweiten Gruppe eine geringere Beeinträchtigung ihrer Datenübertragung darstellen. Im Extremfall gehört von N Transportkanälen nur ein einziger Transportkanal zur ersten Gruppe. Das Problem eines Datenstaus kann somit durch für Daten eines einzigen Transportkanal durchgeführte Maßnahmen gelöst werden. Die Erfindung nutzt aus, dass sich mehrere Transportkanäle die gemeinsam genutzte Übertragungsressource teilen. Maßnahmen an der ersten Gruppe von Transportkanälen, beispielsweise eine Reduzierung der Datenrate, bewirken, dass eine durch die Maßnahmen freiwerdende Kapazität auf der gemeinsam genutzte Übertragungsressource den Transportkanälen der zweiten Gruppe zur Verfügung stehen, so dass die Daten der Transportkanäle der zweiten Gruppe von dem Datenstau nicht oder zumindest nur geringfügig oder kurzzeitig betroffen sind.

Erfindungsgemäß wird das Eintreten oder das bevorstehende Eintreten des Datenstaus ausschließlich anhand von Daten des wenigstens einen Transportkanals der ersten Gruppe festgestellt. Auf diese Weise wird der Überwachungsaufwand für einen Datenstau reduziert. Es werden nicht alle vorhandenen Transportkanäle sondern nur die Transportkanäle der ersten Gruppe hinsichtlich des Datenstaus überprüft.

Vorteilhafter Weise wird als Unterscheidungsmerkmal eine Art der übertragenen Daten und/oder eine Art des Transportkanals und/oder eine zugeordnete Prioritätsklasse verwendet.

Eine Weiterbildung sieht vor, dass als Art der übertragenen Daten zwischen Echtzeit und Nicht-Echtzeit Daten unterschieden wird.

In einer weiteren Weiterbildung wird als Art des Transportkanals hinsichtlich dedizierten und gemeinsam genutzten Transportkanälen unterschieden.

Je nach Wahl des Unterscheidungsmerkmals wird durch die Erfindung ermöglicht, dass die Maßnahmen zur Vermeidung oder Behebung des Datenstaus nur auf eine bestimmte Art von Daten, eine bestimmte Art von Transportkanal oder bestimmte Prioritätsklassen angewendet werden.

In einer bevorzugten Ausgestaltung der Erfindung werden Transportkanäle mit Nicht-Echtzeit Daten und/oder gemeinsam genutzte, d.h. mehreren Teilnehmerstationen zugeordnete Transportkanäle und/oder Transportkanäle mit einer zugeordneten Prioritätsklasse, die geringer ist als ein vorbestimmter Grenzwert, der ersten Gruppe zugeordnet. Vorzugsweise wird nur der Transportkanal mit der geringsten zugeordneten Prioritätsklasse der ersten Gruppe zugeordnet.

Es ist von Vorteil, wenn als zugeordnete Prioritätsklasse eine zugeordnete Dienstqualität (QoS: Quality of Service) verwendet wird.

Allgemein betrachtet gibt eine zugeordnete Prioritätsklasse eine Vergleichsgröße, d.h. ein relatives Maß hinsichtlich einer Wichtigkeit oder eines Bevorzugens der Daten der Transportkanäle im Funknetz an.

Vorteilhafter Weise wird die Zugehörigkeit eines Transportkanals zu der ersten Gruppe durch eine entsprechende Kennung des Transportkanals angezeigt wird.

Auf diese Weise können sowohl die sendende Einrichtung als auch die empfangende Einrichtung anhand der Kennung, beispielsweise einem in Daten der Transportkanäle einfügten Bit, feststellen, ob ein Transportkanal zur ersten Gruppe gehört. Beispielsweise zeigt ein Bit "1" eine Zugehörigkeit zur ersten Gruppe an.

Eine Weiterbildung sieht vor, dass die Kennung des Transportkanals in wenigstens einem gemäß einem Rahmenprotokoll gebildeten und auf dem Transportkanal übertragenen Übertragungsrahmen angezeigt wird, wobei das Rahmenprotokoll einem Transportprotokoll hinsichtlich einer Ebenenstruktur hierarchisch übergeordnet ist.

Vorteilhafterweise wird als Transportprotokoll das Internetprotokoll IP und/oder der Asynchronous Transfer Mode ATM verwendet.

Vorteilhafterweise führt die sendende Einrichtung die Maßnahmen solange durch, bis sie von der empfangenden Einrichtung eine Datenstau-Ende-Information erhält, der entnehmbar ist, dass kein Datenstau mehr vorliegt oder ein Eintreten eines Datenstaus nicht mehr bevorsteht.

Vorteilhafterweise wird der Datenstau oder das bevorstehende Eintreten des Datenstaus durch Messungen einer Bitrate und/oder einer Verzögerungszeit von Daten und/oder einer Anzahl nicht verarbeiteter Daten und/oder einer Speicherauslastung festgestellt.

Es ist von Vorteil, wenn als Maßnahmen eine Datenrate auf wenigstens einem Transportkanal reduziert wird und/oder ein Speicher in der empfangenden Einrichtung für Daten wenigstens eines Transportkanals vergrößert wird und/oder eine Anzahl von Datenpaketen reduziert wird, die bis zum Empfang eines Bestätigungssignals von der sendenden Einrichtung auf wenigstens einem der Transportkanäle übertragen werden dürfen.

Die erfindungsgemäße empfangende Einrichtung und das erfindungsgemäße Funkzugangsnetz weisen alle Merkmale auf, die zur Durchführung des erfindungsgemäßen Verfahrens benötigt werden. Insbesondere können entsprechende Mittel zur Durchführung der einzelnen Verfahrensschritte oder Verfahrensvarianten vorgesehen sein.

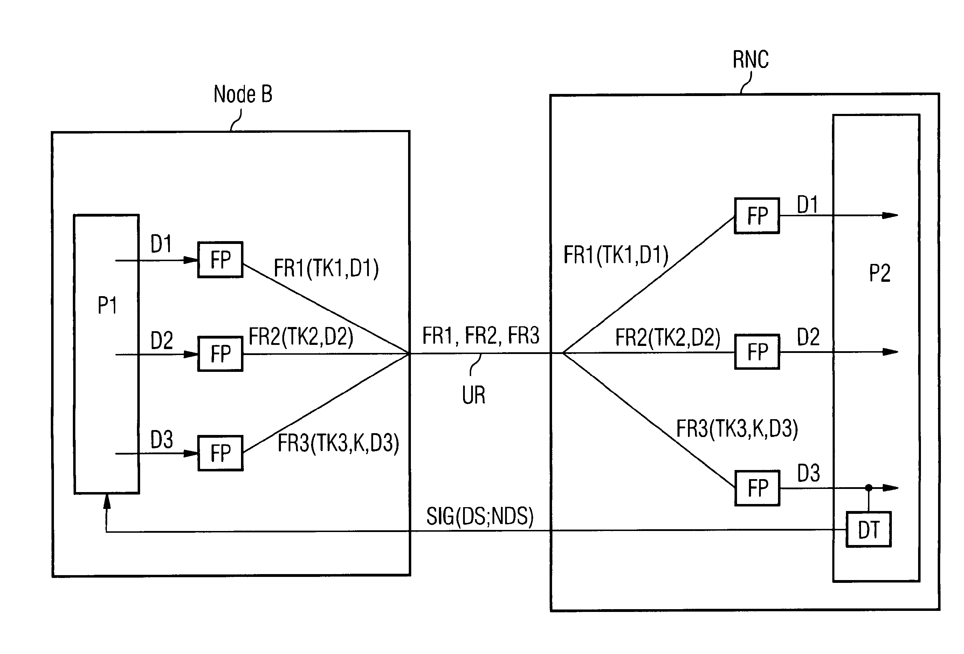

Die Erfindung wird im folgenden anhand eines in der Figur schematisch dargestellten Ausführungsbeispiels näher erläutert.

Eine sendende Einrichtung eines Funkzugangsnetzes ist ebenso wie eine empfangende Einrichtung beispielsweise eine Basisstation oder eine Funknetzsteuerung.

Eine Basisstation ist eine netzseitige Funkstation, die von einer Teilnehmerstation Nutz- und/oder Signalisierungsdaten empfängt und/oder Nutz- und/oder Signalisierungsdaten an die Teilnehmerstation sendet. Eine Basisstation ist über netzseitige Einrichtungen, beispielsweise eine Funknetzsteuerung, mit einem Kernnetz verbunden, über das Verbindungen in andere Funkkommunikationssysteme oder in andere Datennetze erfolgen.

Unter einem Datennetz ist beispielsweise das Internet oder ein Festnetz mit beispielsweise leitungsvermittelten oder paketvermittelten Verbindungen für z.B. Sprache und/oder Daten zu verstehen.

Eine Teilnehmerstation ist beispielsweise ein Mobilfunkendgerät, insbesondere ein Mobiltelefon oder auch eine ortsbewegliche oder ortsfeste Vorrichtung zur Übertragung von Bild- und/oder Tondaten, zum Fax-, Short Message Service SMS-, Multimedia Messaging Service MMS- und/oder Email-Versand und/oder zum Internet-Zugang.

Die Erfindung kann vorteilhaft in beliebigen Funkkommunikationssystemen verwendet werden. Unter Funkkommunikationssystemen sind Systeme zu verstehen, in denen eine Datenübertragung zwischen Funkstationen über eine Luftschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM-(Global System for Mobile Communications) oder dem UMTS-(Universal Mobile Telecommunications System) Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of Electrical and Electronics Engineers) 802.11a-i, HiperLAN1 und HiperLAN2 (HiperLAN: high performance radio local area network) sowie Bluetooth-Netze und Breitbandnetze mit drahtlosem Zugang beispielsweise gemäß IEEE 802.16.

Im Folgenden wird die Erfindung am Beispiel eines Mobilfunksystems nach dem UMTS-Standard beschrieben, ohne jedoch damit zum Ausdruck bringen zu wollen, dass die Erfindung hierauf beschränkt sein soll.

Nachfolgend wird als sendende Einrichtung eine Basisstation betrachtet, ohne jedoch damit zum Ausdruck bringen zu wollen, dass die Erfindung hierauf beschränkt sein soll.

Nachfolgend wird als empfangende Einrichtung eine Funknetzsteuerung betrachtet, ohne jedoch damit zum Ausdruck bringen zu wollen, dass die Erfindung hierauf beschränkt sein soll.

Es liegt selbstverständlich auch im Rahmen der Erfindung, eine Funknetzsteuerung als sendende Einrichtung und eine Basisstation als empfangende Einrichtung zu verwenden. Ebenso liegt es im Rahmen der Erfindung, eine erste Funknetzsteuerung, beispielsweise eine so genannte versorgende Funknetzsteuerung (Serving RNC), als sendende Einrichtung und eine zweite Funknetzsteuerung, beispielsweise eine so genannte weiterleitende Funknetzsteuerung (Drift RNC), als empfangende Einrichtung zu verwenden.

Die Erfindung lässt sich sowohl zum Auflösen eines Datenstaus als auch zum Verhindern eines Datenstaus einsetzen. Das Verhindern eines Datenstaus ist jedoch das bevorzugte Ziel das mittels der Erfindung erreicht werden kann.

Die Figur zeigt eine Basisstation NodeB mit einer ersten Steuereinheit P1 zum Steuern ihrer Datenübertragungen. Die Basisstation NodeB ist über eine Datenleitung UR mit einer Funknetzsteuerung RNC verbunden. Die Funknetzsteuerung RNC verfügt über eine zweite Steuereinheit P2 zum Steuern ihrerer Datenübertragungen. Die Basisstation NodeB steuert eine Datenübertragung für drei Transportkanäle TK1, TK2, TK3. Auf dem ersten Transportkanal TK1 werden erste Daten D1, auf dem zweiten Tarnsportkanal TK2 werden zweite Daten D2 und auf dem dritten Tarnsportkanal TK3 werden dritte Daten D3 übertragen. Die ersten, zweiten und dritten Daten D1, D2, D3 verwenden als Transportschicht (transport layer) den Asynchronous Transfer Mode (ATM) mit Adaption Layer Type 2 (AAL2) und werden mittels eines Rahmenprotokolls FP in Übertragungsrahmen FR1, FR2, FR3 gepackt und über die von allen Transportkanälen TK1, TK2, TK3 als gemeinsame Übertragungsressource genutzte Datenleitung UR an die Funknetzsteuerung RNC übertragen. Alternativ oder zusätzlich zum ATM kann auch ein Internetprotokoll IP als Transportschicht für einen oder alle Transportkanäle verwendet werden.

Die Datenleitung UR ermöglicht, Daten mit einer Datenrate von insgesamt beispielsweise 1 GBit/s zu übertragen. Diese Datenrate müssen sich die drei Transportkanäle TK1, TK2, TK3 teilen. Die Zuordnung von Übertragungsrahmen FR1, FR2, FR3 zu Transportkanälen TK1, TK2, TK3 und somit zu den ersten, zweiten und dritten Daten D1, D2, D3 ist in der Figur durch Einklammern der Bezugszeichen der Transportkanäle TK1, TK2, TK3 sowie der Bezugszeichen der ersten, zweiten und dritten Daten D1, D2, D3 dargestellt.

Bei einem nicht dargestellten Verbindungsaufbau mit einer ebenfalls nicht dargestellten Teilnehmerstation, von der die Basisstation NodeB die ersten, zweiten und dritten Daten D1, D2, D3 empfängt, stellt die Basisstation NodeB fest, welche Dienstqualität den drei Transportkanäle jeweils zugeordnet ist. Diese Information erhält die Basisstation beispielsweise von der Teilnehmerstation oder von einer weiteren netzseitigen Einrichtung, die beispielsweise den Transportkanälen die jeweilige Dienstqualität beim Verbindungsaufbau zugewiesen hat.

Die Basisstation NodeB stellt fest, dass der dritte Transportkanal TK3 die geringste zugeordnete Dienstqualität aufweist. Der dritte Transportkanal TK3 wird daher einer ersten Gruppe von zwei Gruppen von Transportkanälen zugeordnet. Für Transportkanäle der ersten Gruppe werden nachfolgend eine Datenstaukontrolle sowie Maßnahmen zur Datenstauverhinderung durchgeführt. Die beiden anderen Transportkanäle TK1, TK2 sind automatisch der zweiten Gruppe zugeordnet, für die keine Maßnahmen zur Datenstauverhinderung und in diesem Ausführungsbeispiel auch keine Datenstaukontrolle vorgesehen ist.

Zur Kennzeichnung der Zugehörigkeit zur ersten Gruppe wird in Übertragungsrahmen FR3 des dritten Transportkanals TK3 eine Kennung K eingesetzt. Hierbei handelt es sich beispielsweise um ein auf den Wert "1" gesetztes Bit anhand dessen eine empfangende Einrichtung, in diesem Fall die Funknetzsteuerung RNC, erkennen kann, dass für die dritten Daten D3 eine Überwachung hinsichtlich eines Datenstaus erfolgen soll.

Als Kennung kann in Funkzugangsnetzen gemäß dem UMTS-Standard beispielsweise ein vorhandenes, modifiziertes oder neu definiertes Informationselement (IE) gemäß den dort verwendeten Protokollen NBAP (Node B Application Part) und RNSAP (Radio Access Network Application Part) verwendet werden.

Alternativ zur Festlegung durch die Basisstation NodeB sowohl einer Gruppenzugehörigkeit als auch, dass eine Kennung in Übertragungsrahmen eingefügt wird, kann eine Festlegung einer Gruppenzugehörigkeit eines Transportkanals und/oder das Einfügen einer Kennung auch durch die Teilnehmerstation oder eine netzseitige Einrichtung, die über die Dienstqualität oder ein anderes Unterscheidungsmerkmal für Transportkanäle informiert ist, durchgeführt werden.

Die Funknetzsteuerung RNC empfängt die Übertragungsrahmen FR1, FR2, FR3 der drei Transportkanäle TK1, TK2, TK3 über die Datenleitung UR und entnimmt den Übertragungsrahmen FR1, FR2, FR3 unter Anwendung des Rahmenprotokolls FP die jeweiligen Daten D1, D2, D3 und leitet diese beispielsweise an eine nicht dargestellte Einrichtung eines ebenfalls nicht dargestellten Kernnetzes weiter. Mittels der zweiten Steuereinheit P2 erkennt die Funknetzsteuerung, dass die Kennung K in die dritten Daten D3 des dritten Transportkanals TK3 eingefügt wurde, d.h. den Wert "1" aufweist. Der dritte Transportkanal TK3 gehört somit zur ersten Gruppe von Transportkanälen. Die Funknetzsteuerung aktiviert daher erfindungsgemäß ausschließlich für den dritten Transportkanal TK3 eine Überwachungseinheit DT, die feststellt, ob für die dritten Daten D3 ein Datenstau eintritt oder ob ein Eintritt eines Datenstaus bevorsteht. Hierzu kann die Überwachungseinheit DT beispielsweise überwachen, ob eine Weiterleitung der dritten Daten D3 gestört ist, oder ob sich für die dritten Daten D3 eine Übertragungszeit von der Basisstation NodeB zur Funknetzsteuerung RNC vergrößert, oder ob ein Speicher der Funknetzsteuerung RNC für die dritten Daten D3 einen vorgegebenen Auslastungsgrad erreicht hat oder innerhalb eines vorgebbaren Zeitintervalls erreichen wird, oder ob eine Anzahl von dritten Daten D3 pro Zeiteinheit zunimmt, die von der Funknetzsteuerung RNC nicht bearbeitet werden können und beispielsweise unbearbeitet gelöscht werden.

Stellt die Überwachungseinheit DT fest, dass ein Datenstau vorliegt oder bevorsteht, signalisiert sie dies der Basisstation über einen weiteren Transportkanal SIG durch eine entsprechende Datenstauinformation DS.

Eine Überwachung nur der Transportkanäle der ersten Gruppe kann auch dann durchgeführt werden, wenn keine Kennung in Übertragungsrahmen vorhanden ist, die Transportkanäle der ersten Gruppe kennzeichnet. In diesem Fall ermittelt die Funknetzsteuerung RNC selbst - in gleicher Weise wie die Basisstation NodeB - beispielsweise bei dem Verbindungsaufbau die Zugehörigkeit von Transportkanälen zu einer der beiden Gruppen anhand eines Unterscheidungsmerkmals für Transportkanäle, beispielsweise anhand einer den Transportkanälen zugeordneten Dienstqualität, und aktiviert für die derart ermittelten Transportkanäle der ersten Gruppe die Überwachungseinheit DT.

Die Basisstation NodeB ergreift nach dem Empfang der Datenstauinformation DS Maßnahmen, den Datenstau aufzulösen oder sein Eintreten zu verhindern. Diese Maßnahmen führt die Basisstation NodeB jedoch erfindungsgemäß ausschließlich für die dritten Daten D3 durch. Das Durchführen der Maßnahmen führt üblicher Weise dazu, dass der Datenstau verhindert oder aufgelöst wird. Das Erreichen dieses Ziels wird der Basisstation NodeB durch eine entsprechende Datenstau-Ende-Information NDS signalisiert.

Führen die Maßnahmen, beispielsweise nach Ablauf einer vorgebbaren Zeit, nicht zu einer Datenstau-Ende-Information NDS, ordnet die Basisstation NodeB den Transportkanal mit der nächst größeren Dienstqualität der ersten Gruppe zu, fügt in die entsprechenden Übertragungsrahmen die Kennung K ein und die Datenstaukontrolle wird nachfolgend von der Überwachungseinheit DT für diesen Transportkanal durchgeführt. Die Maßnahmen zur Datenstauverhinderung oder Datenstauauflösung führt die Basisstation NodeB dann für diesen Transportkanal durch. Das nachträgliche Zuordnen von Transportkanälen zur ersten Gruppe wird sukzessive auf die vorhandenen Transportkanäle angewendet, bis die Maßnahmen zu einem Erfolg führen.

Es liegt im Rahmen der Erfindung die Transportkanäle, für die die Maßnahmen zu keinem Erfolg geführt haben, trotzdem in der ersten Gruppe zu belassen und weiterhin an der Datenstaukontrolle durch die Überwachungseinheit DT sowie an den Maßnahmen teilnehmen zu lassen, oder alternativ diese Transportkanäle aus der ersten Gruppe zu entfernen, beispielsweise sobald ein Transportkanal von der zweiten Gruppe zur ersten Gruppe umgeordnet wird.

Als Maßnahmen der Basisstation NodeB gegen einen Datenstau, insbesondere gegen das bevorstehende Eintreten eines Datenstaus, kommen beispielsweise folgende Möglichkeiten in Betracht:
- Verringern einer Fenstergröße (window size), d.h. Verringerung einer Anzahl von Datenpaketen, die die Basisstation NodeB auf dem dritten Transportkanal TK3 an die Funknetzsteuerung RNC überträgt, ohne zwischenzeitlich eine Bestätigungsnachricht von der Funknetzsteuerung erhalten zu haben,
- Reduzieren der Datenrate mit der die Übertragungsrahmen FR3 an die Funknetzsteuerung RNC übertragen werden,
- oder Erhöhen einer der Funknetzsteuerung RNC für den dritten Transportkanal TK3 zugewiesenen Speicherkapazität der dritten Daten D3.

Außer einer Zuordnung der Transportkanäle zur ersten Gruppe anhand einer den Transportkanälen zugeordneten Dienstqualität, kann alternativ oder zusätzlich vorgesehen sein, die Transportkanäle beispielsweise hinsichtlich der Art der Daten zuzuordnen.

Beispielsweise liegt es im Rahmen der Erfindung eine Zuordnung zur ersten Gruppe und damit eine Datenstaukontrolle und eine Datenstauverhinderung nur für Nicht-Echtzeit Daten durchzuführen. Allen anderen Daten, d.h. Echtzeitdaten werden automatisch der zweiten Gruppe zugeordnet.

Weiterhin sieht die Erfindung auch vor, dass alle Transportkanäle, deren Dienstqualität oder deren beispielsweise netzseitig festgelegte Prioritätsklasse einen vorbestimmten Grenzwert unterschreiten, der ersten Gruppe zugeordnet werden und somit einer Datenstaukontrolle und einer Datenstauverhinderung unterliegen.

Für Übertragungen in Aufwärtsrichtung (uplink) von der Basisstation NodeB zur Funknetzsteuerung RNC ist beispielsweise vorgesehen, einen so genannten Enhanced-Uplink-Kanal (E-DCH) der ersten Gruppe zuzuordnen, während für andere dedizierte Transportkanäle in Aufwärtsrichtung eine Zuordnung zur zweiten Gruppe erfolgt. Der Enhanced-Uplink-Kanal ist beispielsweise in dem Dokument 3GPP (3rd Generation Partnership Project) TS 25.309 V6.1.0 (2004-12) beschrieben.

In Abwärtsrichtung (downlink) für Übertragungen von der Funknetzsteuerung RNC zur Basisstation NodeB sieht die Erfindung vor, von mehreren Teilnehmerstationen gemeinsam genutzte Transportkanäle, so genannte shared channels (z.B. HS-DSCH: High Speed - Downlink Shared Channel oder DSCH: Downlink Shared Channel), der ersten Gruppe zuzuordnen, während dedizierte Kanäle (DCH: Dedicated Channel) der zweiten Gruppe (automatisch) zugeordnet werden.

## Patentansprüche

1. Verfahren zur Steuerung von Datenübertragungen von einer sendenden Einrichtung (NodeB) an eine empfangende Einrichtung (RNC) eines Funkzugangsnetzes eines Funkkommunikationssystems, bei dem
- Daten (D1, D2, D3) über Transportkanäle (TK1, TK2, TK3) über eine von allen Transportkanälen (TK1, TK2, TK3) gemeinsam genutzte Übertragungsressource (UR) von der sendenden Einrichtung (NodeB) an die empfangende Einrichtung (RNC) übertragen werden,
- der sendenden Einrichtung (NodeB) ein Eintreten oder ein bevorstehendes Eintreten eines Datenstaus in der empfangenden Einrichtung (RNC) signalisiert (DS) wird,
- und die sendende Einrichtung (NodeB) Maßnahmen zum Verhindern oder zum Beenden des Datenstaus durchführt,
- die sendende Einrichtung (NodeB) wenigstens einen der Transportkanäle (TK3) einer ersten von zwei Gruppen von Transportkanälen anhand eines Unterscheidungsmerkmals für die Transportkanäle (TK1, TK2, TK3) zuordnet, und die Maßnahmen ausschließlich auf Daten (D3) von Transportkanälen der ersten Gruppe anwendet,
**dadurch gekennzeichnet,**
**dass** das Eintreten oder das bevorstehende Eintreten des Datenstaus ausschließlich anhand von Daten (D3) des wenigstens einen Transportkanals (TK3) der ersten Gruppe festgestellt wird.

2. Verfahren nach Anspruch 1,
**dadurch gekennzeichnet,**
**dass** als Unterscheidungsmerkmal eine Art der übertragenen Daten und/oder eine Art des Transportkanals und/oder eine zugeordnete Prioritätsklasse verwendet wird.

3. Verfahren nach Anspruch 2,
**dadurch gekennzeichnet,**
**dass** als Art der übertragenen Daten zwischen Echtzeit und Nicht-Echtzeit Daten unterschieden wird.

4. Verfahren nach einem der Ansprüche 2 oder 3,
**dadurch gekennzeichnet,**
**dass** als Art des Transportkanals hinsichtlich dedizierten und gemeinsam genutzten Transportkanälen unterschieden wird.

5. Verfahren nach einem der vorstehenden Ansprüche,
**dadurch gekennzeichnet,**
**dass** Transportkanälen (TK3) mit Nicht-Echtzeit Daten und/oder gemeinsam genutzte Transportkanäle und/oder Transportkanäle mit einer zugeordneten Prioritätsklasse,
die geringer ist als ein vorbestimmter Grenzwert, der ersten Gruppe zugeordnet werden.

6. Verfahren nach einem der Ansprüche 2, 3, 4 oder 5,
**dadurch gekennzeichnet,**
**dass** als zugeordnete Prioritätsklasse eine zugeordnete Dienstqualität verwendet wird.

7. Verfahren nach einem der vorstehenden Ansprüche,
**dadurch gekennzeichnet,**
**dass** die Zugehörigkeit eines Transportkanals (TK3) zu der ersten Gruppe durch eine entsprechende Kennung (K) des Transportkanals (TK3) angezeigt wird.

8. Verfahren nach Anspruch 7,
**dadurch gekennzeichnet,**
**dass** die Kennung (K) des Transportkanals (TK3) in wenigstens einem gemäß einem Rahmenprotokoll (FP) gebildeten und auf dem Transportkanal (TK3) übertragenen Übertragungsrahmen (FR3) angezeigt wird, wobei das Rahmenprotokoll (FP) einem Transportprotokoll hinsichtlich einer Ebenenstruktur hierarchisch übergeordnet ist.

9. Verfahren nach Anspruch 8,
**dadurch gekennzeichnet,**
**dass** als Transportprotokoll das Internetprotokoll IP und/oder der Asynchronous Transfer Mode ATM verwendet wird.

10. Verfahren nach einem der vorstehenden Ansprüche,
**dadurch gekennzeichnet,**
**dass** die sendende Einrichtung (NodeB) die Maßnahmen solange durchführt, bis sie von der empfangenden Einrichtung (RNC) eine Datenstau-Ende-Information (NDS) erhält, der entnehmbar ist, dass kein Datenstau mehr vorliegt oder ein Eintreten eines Datenstaus nicht mehr bevorsteht.

11. Verfahren nach einem der vorstehenden Ansprüche,
**dadurch gekennzeichnet,**
**dass** der Datenstau oder das bevorstehende Eintreten des Datenstaus durch Messungen einer Bitrate und/oder einer Verzögerungszeit von Daten und/oder einer Anzahl nicht verarbeiteter Daten und/oder einer Speicherauslastung festgestellt wird.

12. Verfahren nach einem der vorstehenden Ansprüche,
**dadurch gekennzeichnet,**
**dass** als Maßnahmen eine Datenrate auf wenigstens einem Transportkanal (TK3) reduziert wird und/oder ein Speicher in der empfangenden Einrichtung (RNC) für Daten (D3) wenigstens eines Transportkanals (TK3) vergrößert wird und/oder eine Anzahl von Datenpaketen reduziert wird, die bis zum Empfang eines Bestätigungssignals von der sendenden Einrichtung auf wenigstens einem der Transportkanäle übertragen werden dürfen.

13. Empfangende Einrichtung (RNC) für ein Funkzugangsnetz eines Funkkommunikationssystems,
- mit Mitteln (P2) zur Steuerung von Datenübertragungen zwischen einer sendenden Einrichtung (NodeB) und der empfangenden Einrichtung (RNC)
- mit Mitteln (P2) zum Empfangen von Daten (D1, D2, D3) über Transportkanäle (TK1, TK2, TK3) über eine gemeinsam genutzte tybertragungsressource (UR) von der sendenden Einrichtung (NodeB),
- mit Mitteln (DT) zum Ermitteln, ob ein Datenstau eingetreten ist oder ob der Eintritt eines Datenstaus bevorsteht,
- mit Mitteln (DT) zum Signalisieren (DS) an die sendende Einrichtung (NodeB), dass ein Datenstau eingetreten ist oder dass der Eintritt eines Datenstaus bevorsteht,
- mit Mitteln (P2) zum Zuordnen wenigstens eines der Transportkanäle (TK3) zu einer ersten von zwei Gruppen von Transportkanälen anhand eines Unterscheidungsmerkmals für die Transportkanäle (TK1, TK2, TK3),
**gekennzeichnet dadurch,**
- **dass** die Mittel (DT) zum Ermitteln derart ausgebildet sind, dass ein Eintreten oder ein Bevorstehen eines Datenstaus ausschließlich anhand von Daten (D3) von Transportkanälen (TK3) der ersten Gruppe ermittelt wird.

14. Funkzugangsnetz eines Funkkommunikationssystems, aufweisend zumindest eine sendende Einrichtung (Node B) und eine empfangende Einrichtung (RNC),
wobei die sendende Einrichtung (Node B) ausgestaltet ist
- mit Mitteln (P1) zur Steuerung von Datenübertragungen zwischen der sendenden Einrichtung (NodeB) und einer empfangenden Einrichtung (RNC)
- mit Mitteln (P1) zum Übertragen von Daten (D1, D2, D3) über Transportkanäle (TK1, TK2, TK3) über eine gemeinsam genutzte Übertragungsressource (UR) von der sendenden Einrichtung (NodeB) an die empfangende Einrichtung (RNC),
- mit Mitteln (P1) zum Zuordnen wenigstens eines der Transportkanäle (TK3) zu einer ersten von zwei Gruppen von Transportkanälen anhand eines Unterscheidungsmerkmals für die Transportkanäle (TK1, TK2, TK3), und
- mit Mitteln (P1) zum Empfangen und Bearbeiten einer Datenstauinformation (DS), die der sendenden Einrichtung (NodeB) ein Eintreten oder ein bevorstehendes Eintreten eines Datenstaus in der empfangenden Einrichtung (RNC) signalisiert,
- mit Mitteln (P1) zum Durchführen von Maßnahmen zum Verhindern oder zum Beenden des Datenstaus, wobei die Mittel (P1) zum Durchführen der Maßnahmen derart ausgebildet sind, dass die Maßnahmen ausschließlich auf Daten (D3) von Transportkanälen (TK3) der ersten Gruppe angewendet werden,
und wobei die empfangende Einrichtung (RNC) ausgestaltet ist
- mit Mitteln (P2) zur Steuerung der Datenübertragungen zwischen der empfangenden Einrichtung (RNC) und der sendenden Einrichtung (NodeB),
- mit Mitteln (P2) zum Empfangen von Daten (D1, D2, D3) über Transportkanäle (TK1, TK2, TK3) über die gemeinsam genutzte Übertragungsressource (UR) von der sendenden Einrichtung, (NodeB),
- mit Mitteln (P2) zum Zuordnen wenigstens eines der Transportkanäle (TK3) zu einer ersten von zwei Gruppen von Transportkanälen anhand eines Unterscheidungsmerkmals für die Transportkanäle (TK1, TK2, TK3),
- mit Mitteln (DT) zum Ermitteln, ob ein Datenstau eingetreten ist oder ob der Eintritt eines Datenstaus bevorsteht und
- mit Mitteln (DT) zum Signalisieren (DS) an die sendende Einrichtung (NodeB), dass ein Datenstau eingetreten ist oder dass der Eintritt eines Datenstaus bevorsteht
**gekennzeichnet dadurch**,
- das die Mittel (DT) zum Ermitteln derart ausgebildet sind, dass ein Eintreten oder ein Bevorstehen eines Datenstaus ausschließlich anhand von Daten (D3) von Transportkanälen (TK3) der ersten Gruppe ermittelt wird.

## Claims

1. Method for controlling data transmissions from a transmitting device (NodeB) to a receiving device (RNC) of a radio access network of a radio communication system, in which
- data (D1, D2, D3) is transmitted over transport channels (TK1, TK2, TK3) via a universal transmission resource (UR) used jointly by all transport channels (TK1, TK2, TK3) from the transmitting device (NodeB) to the receiving device (RNC),
- an occurrence or an imminent occurrence of data congestion in the receiving device (RNC) is signalled (RS) to the transmitting device (NodeB),
- and the transmitting device (NodeB) executes measures for ending the data congestion,
- the transmitting device (NodeB) assigns at least one of the transport channels (TK3) to a first of two groups of transport channels on the basic of a differentiation characteristic for the transport channels (TK1, TK2, TK3), and applies the measures exclusively to data (D3) of transport channels of the first group,
**characterised in that**
the occurrence or the imminent occurrence of the data congestion is established exclusively on the basis of data (D3) of the at least one transport channel (TK3) of the first group.

2. Method according to claim 1,
**characterised in that**
A type of the transmitted data and/or a type of the transport channel and/or an assigned priority class is used as the differentiation characteristic

3. Method according to claim 2,
**characterised in that**
a distinction is made between real-time data and non-real-time data as the type of transmitted data.

4. Method according to one of claims 2 or 3,
**characterised in that**
a distinction is made as type of transport channel in respect of dedicated and shared transport channels.

5. Method according to one of the previous claims,
**characterised in that**
transport channels (TK3) with non-real-time data and/or shared-use transport channels and/or transport channels with an assigned priority class which is lower than a predetermined limit value will be assigned to the first group.

6. Method according to one of claims 2, 3, 4 or 5,
**characterised in that**
an assigned quality of service is used as the assigned priority class.

7. The method according to one of the previous claims,
**characterised in that**
the fact that a transport channel (TK3) belongs to the first group is indicated by a corresponding identifier (K) of the transport channel (TK3).

8. The method according to claim 7,
**characterised in that**
the identifier (K) of the transport channel (TK3) is displayed in at least one transmission frame (FR3) formed in accordance with a frame protocol (FP) and transmitted on the transport channel (TK3), with the frame protocol (FP) being hierarchically higher-ranking than a transport protocol in respect of a level structure.

9. Method according to claim 8,
**characterised in that**
the Internet Protocol IP and/or the Asynchronous Transfer Mode ATM are used as the transport protocol.

10. Method according to one of the previous claims,
**characterised in that**
the transmitting device (NodeB) executes the measures until such time as it receives an end of data congestion (NDS) message from the receiving device (RNC) from which it can be taken that data congestion no longer exists or there is no imminent danger of data congestion.

11. Method according to one of the previous claims,
**characterised in that**
data congestion or the imminent occurrence of data congestion are established by measurement of a bit rate and/or of a delay time of data and/or of an amount of non-processed data and/or of memory loading.

12. Method according to one of the previous claims,
**characterised in that**
as measures a data rate on at least one transport channel (TK3) is reduced and/or a memory in the receiving device (RNC) for data (D3) of at least one transport channel (TK3) is enlarged and/or a number of data packets is reduced which may be transmitted on at least one of the transport channels until a confirmation message is received from the transmitting device.

13. Receiving device (RNC) for a radio access network of a radio communication system,
- with means (P2) for controlling data transmissions between a transmitting device (NodeB) and the receiving device (RNC)
- with means (P2) for receiving data (D1, D2, D3) over transport channels (TK1, TK2, TK3) via a universal transmission resource (UR) from the transmitting device (NodeB),
- with means (DT) for determining whether a data congestion has occurred or whether the occurrence or data congestion is imminent,
- with means (DT) for signalling (DS) to the transmitting device (NodeB) that data congestion has occurred or that the occurrence of data congestion is imminent,
- with means (P2) for assigning at least one of the transport channels (TK3) to a first of two groups of transport channels on the basis of a differentiation characteristic for the transport channels (TK1, TK2, TK3),
**characterised in that**
- the means (DT) for determination are embodied such that an occurrence or an imminent occurrence of data congestion is exclusively determined on the basis of data (D3) of transport channels (TK3) of the first group.

14. A radio access network of radio communications system, featuring at least one transmitting device (NodeB) and a receiving device (RNC),
with the transmitting device (NodeB) being equipped
- with means (P1) for controlling data transmissions between the transmitting device (NodeB) and a receiving device (RNC)
- with means (P1) for transmission of data (D1, D2, D3) over transport channels via a universal transmission resource (UR) from the transmitting device (NodeB) to the receiving device (RNC),
- with means (P1) for assigning at least one of the transport channels (TK3) to the first of two groups of transport channels on the basis of a differentiation characteristic for the transport channels (TK1, TK2, TK3), and
- with means (P1) for receiving and processing data congestion information (DS) which signals to the transmitting device (NodeB) and occurrence or an imminent occurrence of data congestion in the receiving device (RNC),
- with means (P1) for executing measures to prevent or to end the data congestion, with the means (P1) for executing the measures being embodied such that the measures are exclusively applied to data (D3) of transport channels (TK3) of the first group,
and with the receiving device (RNC) being equipped
- with means (P2) for controlling the data transmissions between the receiving device (RNC) and the transmitting device (NodeB),
- with means (P2) for receiving data (D1, D2, D3) over transport channels (TK1, TK2, TK3) via the universal transmission resource (UR) from the transmitting device (NodeB),
- with means (P2) for a signing at least one of the transport channels (TK3) to a first of two groups of transport channels on the basis of a differentiation characteristic for the transport channels (TK1, TK2, TK3),
- with means (DT) for determining whether data congestion has occurred or occurrence of data congestion is imminent,
- with means (DT) for signalling (DS) to the transmitting device (NodeB) that data congestion has occurred or that the occurrence of data congestion is imminent,
**characterised in that**
- the means (DT) for determination are embodied such that an occurrence or an imminent occurrence of data congestion is exclusively determined on the basis of data (D3) of transport channels (TK3) of the first group.

## Revendications

1. Procédé de commande de transmissions de données d'un dispositif émetteur (NodeB) vers un dispositif récepteur (RNC) d'un réseau à accès radio d'un système de communication radio, dans lequel
- des données (D1, D2, D3) sont transmises par des canaux de transport (TK1, TK2, TK3), via une ressource de transmission (UR) utilisée en commun par tous les canaux de transport (TK1, TK2, TK3), du dispositif émetteur (NodeB) vers le dispositif récepteur (RNC),
- une arrivée ou une arrivée imminente d'une congestion de données dans le dispositif récepteur (RNC) est signalée (DS) au dispositif émetteur (NodeB),
- et le dispositif émetteur (NodeB) mène des actions pour empêcher ou mettre fin à la congestion de données,
- le dispositif émetteur (NodeB) attribue au moins un des canaux de transport (TK3) à un premier de deux groupes de canaux de transport à l'aide d'une caractéristique distinctive des canaux de transport (TK1, TK2, TK3) et applique les actions exclusivement à des données (D3) de canaux de transport du premier groupe,
**caractérisé en ce que**
l'arrivée ou l'arrivée imminente de la congestion de données est constatée exclusivement à l'aide de données (D3) dudit au moins un canal de transport (TK3) du premier groupe.

2. Procédé selon la revendication 1,
**caractérisé en ce que**
on utilise comme caractéristique distinctive un type des données transmises et/ou un type du canal de transport et/ou une classe de priorité attribuée.

3. Procédé selon la revendication 2,
**caractérisé en ce que**
comme type des données transmises, on distingue entre données temps réel et non temps réel.

4. Procédé selon l'une des revendications 2 ou 3,
**caractérisé en ce que**
comme type du canal de transport, on distingue par rapport aux canaux de transport dédiés et utilisés en commun.

5. Procédé selon l'une des revendications précédentes,
**caractérisé en ce que**
on attribue au premier groupe les canaux de transport (TK3) avec des données non temps réel et/ou les canaux de transport avec une classe de priorité attribuée, inférieure à une valeur limite prédéterminée.

6. Procédé selon l'une des revendications 2, 3, 4 ou 5,
**caractérisé en ce que**
on utilise comme classe de priorité attribuée une qualité de service attribuée.

7. Procédé selon l'une des revendications précédentes,
**caractérisé en ce que**
l'appartenance d'un canal de transport (TK3) au premier groupe est indiquée par un identificateur correspondant (K) du canal de transport (TK3).

8. Procédé selon la revendication 7;
**caractérisé en ce que**
l'identificateur (K) du canal de transport (TK3) est indiqué dans au moins une trame de transmission (FR3), établie selon un protocole de trame (FP) et transmise sur le canal de transport (TK3), le protocole de trame (FP) étant hiérarchiquement supérieur à un protocole de transport par rapport à une structure organisée en niveaux.

9. Procédé selon la revendication 8,
**caractérisé en ce que**
on utilise comme protocole de transport le protocole Internet IP et/ou le mode de transfert asynchrone ATM.

10. Procédé selon l'une des revendications précédentes,
**caractérisé en ce que**
le dispositif émetteur (NodeB) mène les actions jusqu'à ce qu'il reçoive du dispositif récepteur (RNC) une information de fin de congestion de données (NDS), dans laquelle est indiqué qu'il n'y a plus de congestion de données ou qu'une arrivée d'une congestion de données n'est plus imminente.

11. Procédé selon l'une des revendications précédentes,
**caractérisé en ce que**
la congestion de données, ou l'arrivée imminente de la congestion de données, est constatée par des mesures d'un débit binaire et/ou d'un temps de retard de données et/ou d'un nombre de données non traitées et/ou d'une charge de mémoire.

12. Procédé selon l'une des revendications précédentes,
**caractérisé en ce que**
les actions consistent à diminuer un débit binaire sur au moins un canal de transport (TK3) et/ou à augmenter une mémoire dans le dispositif récepteur (RNC) pour des données (D3) d'au moins un canal de transport (TK3) et/ou à diminuer un nombre de paquets de données pouvant être transmis sur au moins un des canaux de transport jusqu'à réception d'un signal de confirmation du dispositif émetteur.

13. Dispositif récepteur (RNC) pour un réseau à accès radio d'un système de communication radio,
- avec des moyens (P2) de commande de transmissions de données entre un dispositif émetteur (NodeB) et le dispositif récepteur (RNC),
- avec des moyens (P2) pour recevoir des données (D1, D2, D3) du dispositif émetteur (NodeB) par des canaux de transport (TK1, TK2, TK3) via une ressource de transmission (UR) utilisée en commun,
- avec des moyens (DT) pour déterminer si une congestion de données est arrivée ou si l'arrivée d'une congestion de données est imminente,
- avec des moyens (DT) pour signaler (DS) au dispositif émetteur (NodeB) qu'une congestion de données est arrivée ou que l'arrivée d'une congestion de données est imminente,
- avec des moyens (P2) pour attribuer au moins un des canaux de transport (TK3) à un premier de deux groupes de canaux de transport à l'aide d'une caractéristique distinctive des canaux de transport (TK1, TK2, TK3),
**caractérisé en ce que**
- lesdits moyens (DT) pour déterminer sont conçus de telle sorte qu'une arrivée ou une arrivée imminente d'une congestion de données est déterminée exclusivement à l'aide de données (D3) de canaux de transport (TK3) du premier groupe.

14. Réseau à accès radio d'un système de communication radio, comprenant au moins un dispositif émetteur (NodeB) et un dispositif récepteur (RNC),
le dispositif émetteur (NodeB) étant conçu
- avec des moyens (P1) de commande de transmissions de données entre le dispositif émetteur (NodeB) et un dispositif récepteur (RNC),
- avec des moyens (P1) pour transmettre des données (D1, D2, D3) par des canaux de transport (TK1, TK2, TK3), via une ressource de transmission (UR) utilisée en commun, du dispositif émetteur (NodeB) vers le dispositif récepteur (RNC),
- avec des moyens (P1) pour attribuer au moins un des canaux de transport (TK3) à un premier de deux groupes de canaux de transport à l'aide d'une caractéristique distinctive des canaux de transport (TK1, TK2, TK3), et
- avec des moyens (P1) pour recevoir et traiter une information de congestion de données (DS), signalant au dispositif émetteur (NodeB) une arrivée ou une arrivée imminente d'une congestion de données dans le dispositif récepteur (RNC),
- avec des moyens (P1) pour mener des actions visant à empêcher ou à mettre fin à la congestion de données, lesdits moyens (P1) pour mener lesdites actions étant conçus de telle sorte que les actions sont appliquées exclusivement à des données (D3) de canaux de transport (TK3) du premier groupe,
et le dispositif récepteur (RNC) étant conçu
- avec des moyens (P2) de commande de transmissions de données entre le dispositif récepteur (RNC) et le dispositif émetteur (NodeB),
- avec des moyens (P2) pour recevoir des données (D1, D2, D3) du dispositif émetteur (NodeB) par des canaux de transport (TK1, TK2, TK3) via la ressource de transmission (UR) utilisée en commun,
- avec des moyens (P2) pour attribuer au moins un des canaux de transport (TK3) à un premier de deux groupes de canaux de transport à l'aide d'une caractéristique distinctive des canaux de transport (TK1, TK2, TK3),
- avec des moyens (DT) pour déterminer si une congestion de données est arrivée ou si l'arrivée d'une congestion de données est imminente,
- et avec des moyens (DT) pour signaler (DS) au dispositif émetteur (NodeB) qu'une congestion de données est arrivée ou que l'arrivée d'une congestion de données est imminente,
**caractérisé en ce que**
- lesdits moyens (DT) pour déterminer sont conçus de telle sorte qu'une arrivée ou une arrivée imminente d'une congestion de données est déterminée exclusivement à l'aide de données (D3) de canaux de transport (TK3) du premier groupe.
